# EUROPÄISCHE PATENTSCHRIFT

(11) **EP 2 420 400 B1**
(45) Veröffentlichungstag und Bekanntmachung des Hinweises auf die Patenterteilung: **02.07.2014**
(21) Anmeldenummer: 11174000.7
(22) Anmeldetag: 14.07.2011
(51) Int. Cl.: B60J 7/16, B60J 7/14

(54) **Fahrzeug mit Abdeckvorrichtung für den Ladeaufbau**
Vehicle with cover device for loading structure
Véhicule avec dispositif de toit ouvrant pour le plateau arrière

(30) Priorität: 20.08.2010 DE 202010008320 U
(43) Veröffentlichungstag der Anmeldung: 22.02.2012
(73) Patentinhaber: Fliegl, Josef, 84453 Mühldorf (DE)
(72) Erfinder: Fliegl, Josef, 84453 Mühldorf (DE)
(74) Vertreter: Tetzner, Michael

(56) Entgegenhaltungen:
- DE-A1- 3 529 524
- GB-A- 2 405 846
- US-A1- 2007 236 042

## Beschreibung

Die Erfindung betrifft ein Fahrzeug mit einem durch Stirnwände und Seitenwände definierten, oben offenen Ladeaufbau und einer Abdeckvorrichtung, die den Ladeaufbau in einer Schließstellung verschließt und ihn in einer Öffnungsstellung freigibt.

Ein oben offener Ladeaufbau wird insbesondere für Schüttgüter, aber auch andere Güter verwendet, die von oben geladen werden können. Vielfach sind diese Güter jedoch feuchteempfindlich oder können leicht durch den Fahrtwind verweht werden. Es kommen daher vielfach Abdeckvorrichtungen zur Anwendung, die üblicherweise durch Schiebe- oder Rollplanen gebildet werden. Das Ziehen derartige Planen über die Ladeöffnung ist jedoch aufwendig, da sich der Mechanismus oft verkantet und/oder durch Ladegut behindert wird. Auf diese Weise kann bei überraschenden Regengüssen oder Hagelschauern wertvolle Zeit verloren gehen.

In der US 6,402,233 B2 wird zunächst eine aus zwei Dachsegmenten bestehende Abdeckvorrichtung als Stand der Technik beschrieben, die zwischen einer Schließstellung und einer Öffnungsstellung verschwenkbar ist, wobei jedes Dachsegment drehfest mit einer Antriebswelle im Bereich der oberen Längskanten der Seitenwände verbunden ist. Der Antrieb der Antriebswellen erfolgt über einen von Hand zu betätigenden Kettenantrieb. Dieser Schwenkmechanismus wird in der US 6,402,223 B2 aber als relativ mühsam und nachteilig angesehen, sodass als Alternative vorgeschlagen wird, die beiden Dachsegmente über jeweils vier Gelenkstangen zu betätigen, wobei jeweils zwei Gelenkstangen drehfest mit einer Antriebswelle verbunden ist.

Weiterhin ist ein Fahrzeug mit einem Schwenkmechanismus aus der DE 10 2007 043 818 B4 bekannt, wobei der Schwenkmechanismus wenigstens eine Antriebswelle im Bereich einer oberen Längskante einer Seitenwande aufweist und ein Dachsegment drehfest mit der Antriebswelle verbunden ist.

Weiterhin betrifft die DE 35 29 524 A1 ein Fahrzeug mit einem Schwenkmechanismus zum Öffnen von Abdeckungen eines Ladesaufbaus, wobei der Schwenkmechanismus einen Zahnstangenantrieb zum Drehen einer mit der Abdeckung verbundenen Antriebswelle umfasst.

Der Erfindung liegt die Aufgabe zugrunde einen Schwenkmechanismus für die Abdeckvorrichtung für einen oben offenen Ladeaufbau eines Fahrzeuges anzugeben, der eine einfache und schnelle Bedienung ermöglicht.

Erfindungsgemäß wird diese Aufgabe durch die Merkmale des Anspruches 1 gelöst.

Das erfindungsgemäße Fahrzeug weist einen durch Stirnwände und Seitenwände definierten, oben offenen Ladeaufbau und eine Abdeckvorrichtung auf, mit welcher der Ladeaufbau in einer Schließstellung verschlossen und in einer Öffnungsstellung freigegeben wird, wobei die Abdeckvorrichtung wenigstens ein Dachsegment umfasst, das mittels wenigstens einem Schwenkmechanismus zwischen der Schließstellung und der Öffnungsstellung verschwenkbar ist. Der Schwenkmechanismus weist wenigstens einer Antriebswelle im Bereich einer oberen Längskante eines der beiden Seitenwände auf, an der das Dachsegment drehfest verbunden ist.

Der Schwenkmechanismus umfasst weiterhin einen Zahnstangenantrieb mit einer Zahnstange, wobei die Zahnstange mit einem drehfest mit der Antriebswelle verbundenen Zahnrad zum Öffnen und Schließen des Dachsegments in Wirkverbindung steht. Weiterhin ist die Antriebswelle an wenigstens zwei Schwenkhebeln, drehbar gehaltert, wobei die Schwenkhebel beim Öffnen des wenigstens einen Dachsegments um eine gemeinsame Schwenkachse in einem begrenzten Winkelbereich von 5 bis 30° von der Seitenwand wegschwenken. Durch diese Konstruktion wird die Antriebswelle in der Öffnungsstellung nach außen geschwenkt und ermöglicht somit ein Abklappen des Dachsegment parallel zu den Seitenwänden. In der Schließstellung hingegen wird die Antriebswelle nach innen gezogen. Auf diese Weise wird vermieden, dass die Antriebswellen in der Schließstellung seitlich außerhalb der Seitenwände angeordnet sind und dadurch die lichte Breite des Laderaums begrenzen, da für den Straßenbetrieb nur eine maximale Fahrzeugbreite zulässig ist.

Dieser Schwenkmechanismus erlaubt ein einfaches und schnelles Verschließen des Ladeaufbaus.

Weitere Ausgestaltungen der Erfindung sind Gegenstand der Unteransprüche.

Gemäß einem bevorzugten Ausführungsbeispiel befmden sich die beiden Dachsegmente in der Öffnungsstellung seitlich neben den Seitenwänden. In der Schließstellung können die Dachsegmente insbesondere nach Art eines Satteldachs angeordnet werden. Auf diese Weise kann auch ein überhoch aufgeschüttetes Ladegut problemlos überdacht werden, ohne dass überschüssiges Ladegut mühsam von Hand abgetragen werden muss, wie dies bei einer Schiebe- oder Rollplane der Fall wäre. Zweckmäßigerweise überlappen die beiden Dachsegmente in der Schließstellung, um einen zuverlässigen Schutz des Ladegutes zu gewährleisten.

Der Schwenkmechanismus weist vorzugsweise einen doppeltwirkenden Betätigungszylinder zum Antrieb der Zahnstange auf. Der Zahnstangenantrieb steht zweckmäßigerweise mit seinem einen Ende mittels seiner Zahnstange mit dem Zahnrad der Antriebswelle in Verbindung und ist an seinem anderen Ende gelenkig im Bereich einer der Stirn- oder Seitenwände gehaltert.

Die Schwenkhebel sind zweckmäßigerweise an den Seitenwänden um eine Schwenkachse verschwenkbar gehaltert, wobei die Antriebswelle an einem Ende des Schwenkhebels gehaltert ist, während der Schwenkhebel in einem Mittelbereich des Schwenkhebels an der Seitenwand gelagert ist. Das andere Ende des Schwenkhebels kann dann als Anschlag für die Schwenkbewegung in Richtung der Öffnungsstellung des Dachsegmentes dienen.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung des Ladeaufbaus,
- Fig. 2: eine Stirnansicht des Ladeaufbaus, wobei sich das linke Dachsegment in der Schließstellung und das rechte Dachsegment in der Öffnungsstellung befindet,
- Fig. 3: eine dreidimensionale Detailansicht des Zahnstangenantriebs,
- Fig.4: eine dreidimensionale Detailansicht des Schwenkhebels in der Schließstellung,
- Fig. 5: eine dreidimensionale Detailansicht des Schwenkhebels in der Öffnungsstellung und
- Fig. 6a-6d: Detailansichten des Schwenkhebels/Dachsegments in verschiedenen Stellungen zwischen Schließ- und Öffnungsstellung eines Dachsegments.

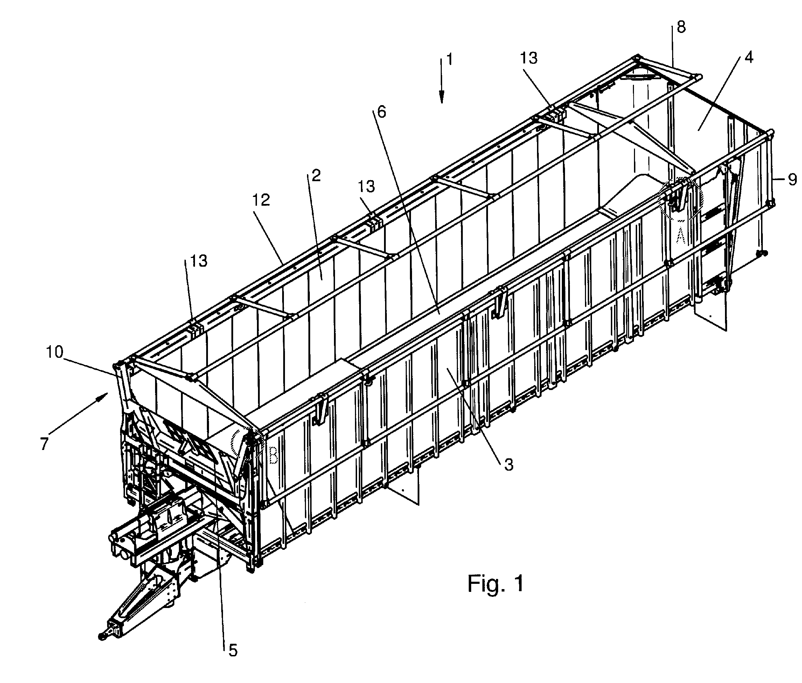

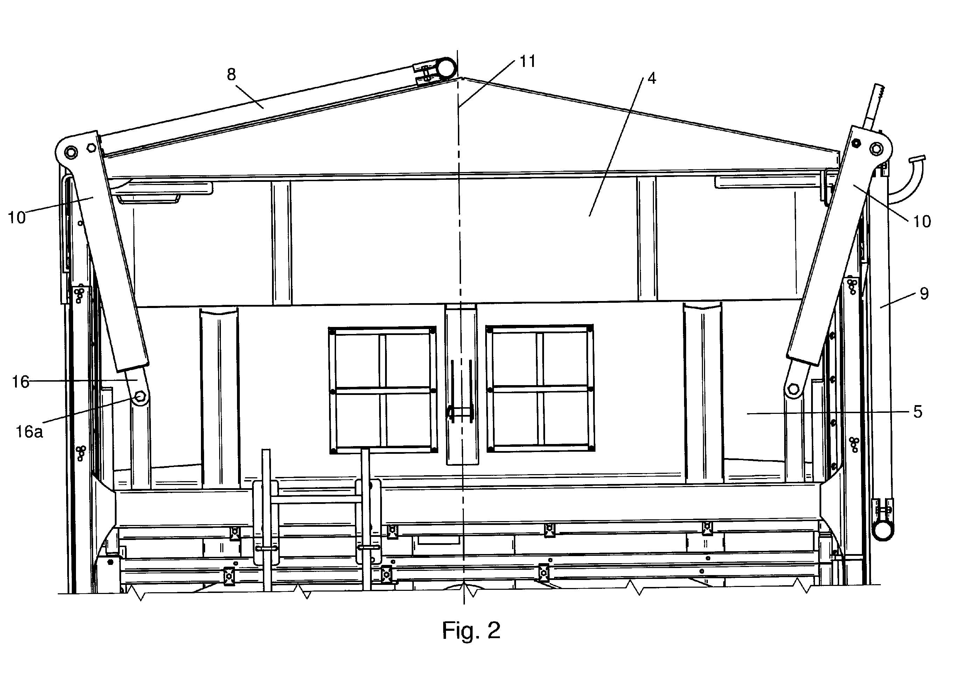

Der in Fig. 1 und 2 dargestellte Ladeaufbau ist auf einem nicht näher dargestellten Fahrzeug, insbesondere einem Anhänger oder einem Lastkraftwagen, vorgesehen. Er besteht im Wesentlichen aus zwei Seitenwänden 2 und 3, einer hinteren Stirnwand 4, einer vorderen Stirnwand 5 und einem Boden 6. Der Ladeaufbau ist ferner oben offen ausgebildet, sodass der von oben mit Ladegut, beispielsweise mit landwirtschaftlichen Schnittgut oder anderen Gütern beladen werden kann. Die vordere Stirnwand 5 kann beispielsweise als Schubwand ausgebildet sein. Auch der Boden 6 kann einen Schubboden aufweisen.

Zum Schutz der Ladung ist ferner eine Abdeckvorrichtung 7 vorgesehen, die zwei Dachsegmente 8, 9 und einen Schwenkmechanismus 10 umfasst. Die Dachsegmente weisen jeweils einen versteiften Rahmen auf, der mit einer nicht näher dargestellten Gewebeplane oder einer anderen, flächigen, zweckmäßigerweise aber leichten Abdeckung versehen ist. Die beiden Dachsegmente 8, 9 sind so angeordnet bzw. ausgebildet, dass sie in der Schließstellung im Bereich der Längsmittelebene 11 (siehe Fig. 2) etwas überlappen, damit der Ladeaufbau auch in diesem Bereich vollkommen regendicht abgeschlossen ist.

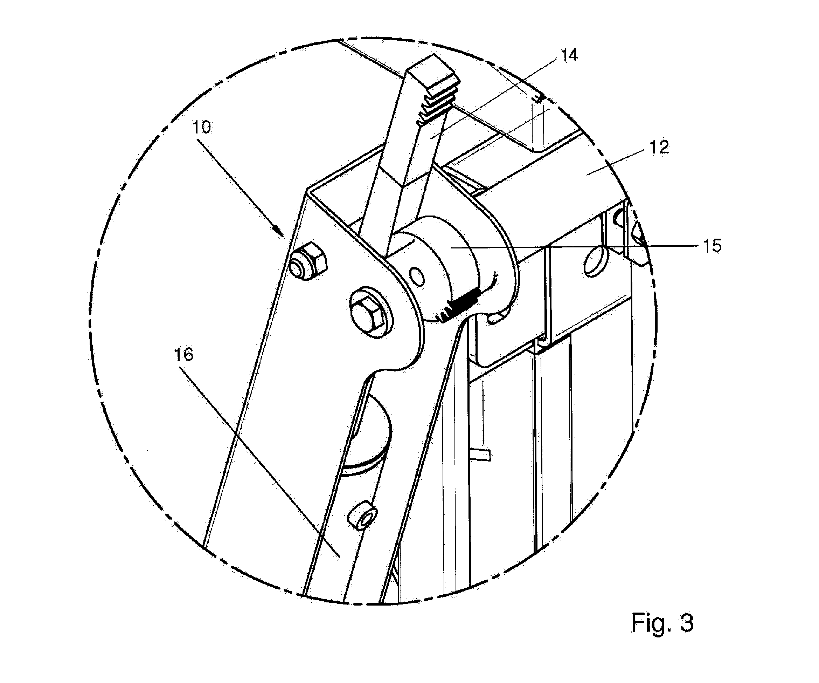

Jedes Dachsegment 8, 9 ist an seiner äußeren Längskante drehfest mit einer Antriebswelle 12 verbunden. Die Antriebswelle 12 ist in geeigneten Lagern 13 im Bereich der oberen Längskante jeder Seitenwand 2, 3 drehbar gelagert. Jede Antriebswelle 12 weist einen zugehörigen Schwenkmechanismus 10 auf, der einen Zahnstangenantrieb mit einer Zahnstange 14 umfasst, die mit einem drehfest mit der Antriebswelle 12 verbunden Zahnrad 15 zum Öffnen und Schließen des zugehörigen Dachsegments in Wirkverbindung steht (Fig.3). Weiterhin ist ein doppeltwirkender Betätigungszylinder 16 vorgesehen, mit dem die Zahnstange 14 in beiden Richtungen bewegt werden kann. Der Betätigungszylinder 16 ist an einer Gelenkstelle 16a im Bereich der vorderen Stirnwand 5 gelenkig gelagert. Eine Bewegung der Zahnstange 14 bewirkt somit eine Drehung der Antriebswelle 12 und damit ein Öffnen bzw. Schließen des zugehörigen Dachsegments.

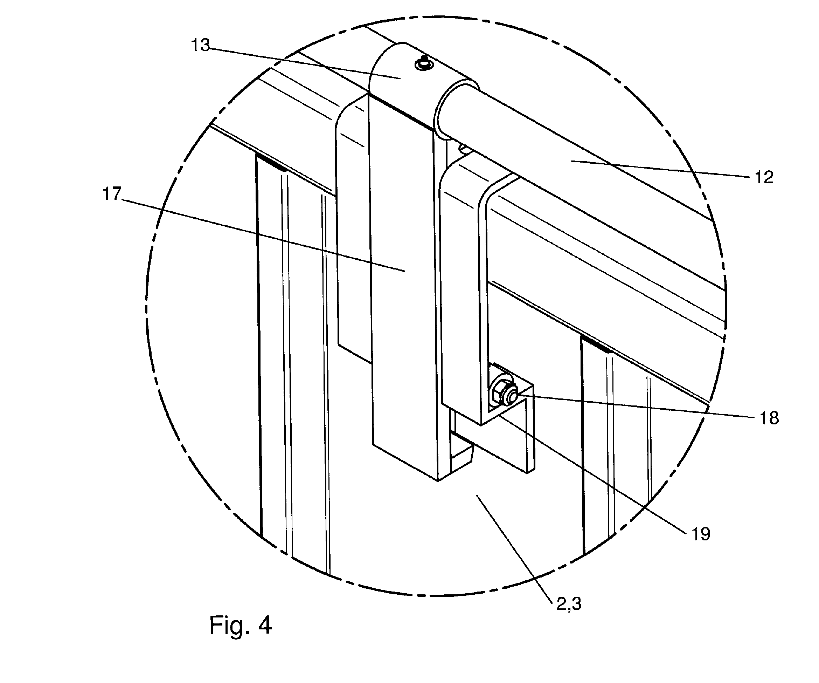

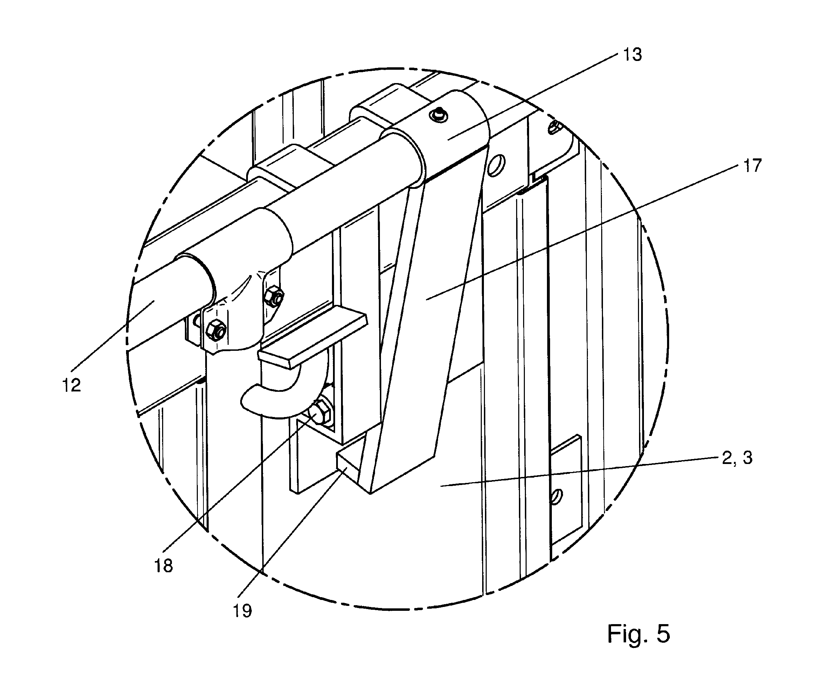

Die gelenkige Lagerung des Betätigungszylinders 16 ist deswegen erforderlich, weil die Antriebswelle 12 nicht ortsfest in den Lagern 13 gehaltert ist, sondern die Lager 13 an Schwenkhebeln 17 angeordnet sind, wie dies anhand der Fig. 4 und 5 ersichtlich ist. Die Schwenkhebel 17 können um eine gemeinsame Schwenkachse 18 in einem begrenzten Winkelbereich von 5 bis 30° von der zugehörigen Seitenwand wegschwenken. Fig. 4 zeigt den Schwenkhebel 17 in der Schließstellung des zugehörigen Dachsegments, während in Fig. 5 die ausgeschwenkte Stellung des Schwenkhebels 17 in der Öffnungsstellung des Dachsegments dargestellt ist.

Der Schwenkhebel 17 ist einem mittleren Bereich des Schwenkhebels in einem geeigneten Lager an der Seitenwand 2 bzw. 3 gelagert. Am oberen Ende des Schwenkhebels ist das Lager 13 für die Antriebswelle 12 gehaltert, während am anderen Ende einen Anschlag 19 vorgesehen ist, der in der ausgeschwenkten Stellung des Schwenkhebels 17 gemäß Fig. 5 mit der Seitenwand 2 bzw. 3 in Kontakt kommt und auf diese Weise die Schwenkbewegung begrenzt.

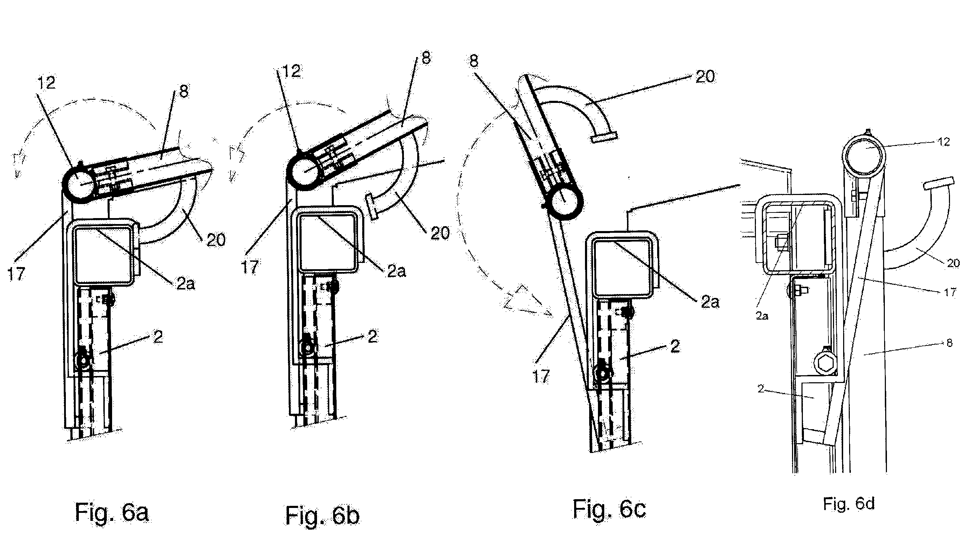

In den Figuren 6a-6d sind verschiedene Stellungen zwischen der Schließstellung (Fig. 6a) und der Öffnungsstellung (Fig. 6d) des Dachsegmentes dargestellt. In der Schließstellung befindet sich die Antriebswelle 12 genau oberhalb eines oberen Längskantenprofils 2a der Seitenwand 2 und steht somit nicht seitlich über die Seitenwand 2 hervor. Das Dachsegment stützt sich in der Schließstellung mit einer Abstützung 20 am Längskantenprofil 2a ab und blockiert somit auch eine weitere Bewegung des Dachsegmentes 8. In der Öffnungsstellung gemäß Fig. 6d ist die Antriebswelle 12 durch den Schwenkhebel 17 nach außen geschwenkt, sodass ein vollständiges Abschwenken der Seitenwand ermöglicht wird. In dieser Öffnungsstellung befindet sich das Dachsegment in etwa parallel zur entsprechenden Seitenwand. Damit der Betätigungszylinder 16 dieser Bewegung der Antriebswelle folgen kann, ist die gelenkige Lagerung im Bereich der Gelenkstelle 16a erforderlich.

Beim Schwenken in die Schließstellung zieht der Schwenkhebel 17 das zugehörige Dachsegment zur Mitte in die gewünschte Auflageposition. Da im Straßenbetrieb eine maximale Fahrzeugbreite von 2550 mm derzeit nicht überschritten werden darf, kann durch das Verschwenken der Antriebswelle 12 der Laderaum mit maximal möglicher lichter Breite ausgestattet werden und es muss dennoch nicht darauf verzichtet werden, dass die Dachsegmente in der Öffnungsstellung plan an den Seitenwänden anliegen und dadurch auch ein unproblematisches Beladen von der Seite ermöglicht wird.

## Patentansprüche

1. Fahrzeug mit einem durch Stirnwände (4, 5) und Seitenwände (2, 3) definierten, oben offenen Ladeaufbau (1) und einer Abdeckvorrichtung (7), die den Ladeaufbau (1) in einer Schließstellung verschließt und ihn in einer Öffnungsstellung freigibt, wobei die Abdeckvorrichtung wenigstens ein Dachsegment (8, 9) umfasst, das mittels wenigstens einem Schwenkmechanismus (10) zwischen der Schließstellung und der Öffnungsstellung verschwenkbar ist, wobei der Schwenkmechanismus (10) wenigstens eine Antriebswelle (12) im Bereich einer oberen Längskante eines der beiden Seitenwände (2, 3) aufweist und das Dachsegment drehfest mit der Antriebswelle (12) verbunden ist, und
der Schwenkmechanismus (10) einen Zahnstangenantrieb mit einer Zahnstange (14) umfasst, wobei die Zahnstange mit einem drehfest mit der Antriebswelle (12) verbundenen Zahnrad (15) zum Öffnen und Schließen des Dachsegments (8, 9) in Wirkverbindung steht,
**dadurch gekennzeichnet, dass** die Antriebswelle (12) an wenigstens zwei Schwenkhebeln (17) drehbar gehaltert ist, wobei die Schwenkhebel beim Öffnen des wenigstens einen Dachsegments (8, 9) um eine gemeinsame Schwenkachse (8) in einem begrenzten Winkelbereich von 5 bis 30° von der Seitenwand (2, 3) wegschwenkbar sind.

2. Fahrzeug nach Anspruch 1, **dadurch gekennzeichnet, dass** sich das wenigstens eine Dachsegment (8, 9) in der Öffnungsstellung seitlich neben einer der beiden Seitenwände (2, 3) befindet.

3. Fahrzeug nach Anspruch 1, **dadurch gekennzeichnet, dass** die Schwenkhebel (17) an einer Seitenwand (2, 3) um einen Schwenkachse (18) verschenkbar gehaltert sind.

4. Fahrzeug nach Anspruch 3, **dadurch gekennzeichnet, dass** die Antriebswelle (12) an einem Ende des Schwenkhebels (17) gehaltert ist und der Schwenkhebel (17) in einem Mittelbereich des Schwenkhebels an der Seitenwand (2, 3) gelagert ist.

5. Fahrzeug nach Anspruch 4, **dadurch gekennzeichnet, dass** das andere Ende des Schwenkhebels (17) als Anschlag (19) für die Schenkbewegung in Richtung der Öffnungsstellung des Dachsegments (8, 9) dient.

6. Fahrzeug nach einem oder mehreren der vorhergehenden Ansprüche, **dadurch gekennzeichnet, dass** zwei Dachsegmente (8, 9) vorgesehen sind, die in der Schließstellung nach Art eines Satteldachs angeordnet sind.

7. Fahrzeug nach Anspruch 6, **dadurch gekennzeichnet, dass** sich die beiden Dachsegmente (8, 9) in der Schließstellung teilweise überlappen.

8. Fahrzeug nach einem oder mehreren der vorhergehenden Ansprüche 6 oder 7, **dadurch gekennzeichnet, dass** jedes Dachsegment (8, 9) einen eigenen Schwenkmechanismus (10) aufweist.

9. Fahrzeug nach einem oder mehreren der vorhergehenden Ansprüche, **dadurch gekennzeichnet, dass** das wenigstens eine Dachsegment (8, 9) eine Abstützung (20) aufweist, der in der Schließstellung mit der Seitenwand (2, 3) in Kontakt kommt.

10. Fahrzeug nach einem oder mehreren der vorhergehenden Ansprüche, **dadurch gekennzeichnet, dass** der Schwenkmechanismus (10) einen doppeltwirkenden Betätigungszylinder (16) zum Antrieb der Zahnstange (14) aufweist.

11. Fahrzeug nach einem oder mehreren der vorhergehenden Ansprüche, **dadurch gekennzeichnet, dass** der Zahnstangenantrieb an seinem einen Ende mit seiner Zahnstange (14) mit dem Zahnrad (15) der Antriebswelle (12) in Verbindung steht und an seinem gegenüberliegenden Ende gelenkig im Bereich einer der Stirn- oder Seitenwände gehaltert ist.

## Claims

1. A vehicle having an open-top load body (1) defined by end walls (4, 5) and side walls (2, 3) and having a cover arrangement (7) which closes the load body (1) in a closed position and opens it in an open position, the cover arrangement including at least one roof segment (8, 9) which is pivotable between the closed position and the open position by means of at least one pivoting mechanism (10), the pivoting mechanism (10) having at least one drive shaft (12) in the region of an upper longitudinal edge of one of the two side walls (2, 3) and the roof segment being rigidly connected to the drive shaft (12), and
the pivoting mechanism (10) includes a rack and pinion drive having a rack (14), the rack being in operative connection with a pinion (15) rigidly connected to the drive shaft (12) for the purpose of opening and closing the roof segment (8, 9),
**characterised in that** the drive shaft (12) is held rotatably on at least two pivoted levers (17), the pivoted levers being pivotable away from the side wall (2, 3) about a common pivot axis (18) in a limited angle range of from 5 to 30° on opening of the at least one roof segment (8, 9).

2. A vehicle according to claim 1, **characterised in that** the at least one roof segment (8, 9) is situated, in the open position, to the side of and next to one of the two side walls (2, 3).

3. A vehicle according to claim 1, **characterised in that** the pivoted levers (17) are held on a side wall (2, 3) in such a manner as to be pivotable about a pivot axis (18).

4. A vehicle according to claim 3, **characterised in that** the drive shaft (12) is held at one end of the pivoted lever (17) and the pivoted lever (17) is supported on the side wall (2, 3) in a central region of the pivoted lever.

5. A vehicle according to claim 4, **characterised in that** the other end of the pivoted lever (17) serves as a stop (19) for the pivoting movement in the direction of the open position of the roof segment (8, 9).

6. A vehicle according to one or more of the preceding claims, **characterised in that** two roof segments (8, 9) are provided, which in the closed position are arranged in the manner of a double-pitch roof.

7. A vehicle according to claim 6, **characterised in that** the two roof segments (8, 9) partially overlap in the closed position.

8. A vehicle according to one or more of the preceding claims 6 and 7, **characterised in that** each roof segment (8, 9) has its own pivoting mechanism (10).

9. A vehicle according to one or more of the preceding claims, **characterised in that** at least one roof segment (8, 9) has a support member (20) which in the closed position comes into contact with the side wall (2, 3).

10. A vehicle according to one or more of the preceding claims, **characterised in that** the pivoting mechanism (10) has a double-acting operating cylinder (16) for driving the rack (14).

11. A vehicle according to one or more of the preceding claims, **characterised in that** at its one end the rack and pinion drive is connected by its rack (14) to the pinion (15) of the drive shaft (12) and at its opposite end the rack and pinion drive is held in an articulated manner in the region of one of the end walls or side walls.

## Revendications

1. Véhicule qui est doté d'une structure de chargement (1) ouverte en haut, définie par des parois frontales (4, 5) et des parois latérales (2,3) et d'un dispositif de toit (7), qui ferme la structure de chargement (1) dans une position de fermeture et la découvre dans une position d'ouverture, sachant que le dispositif de toit comprend au moins un segment de toit (8, 9) qui, au moyen d'un mécanisme de pivotement (10), peut pivoter entre la position de fermeture et la position d'ouverture, le mécanisme de pivotement (10) étant doté d'au moins un arbre de commande (12) dans la région d'un bord longitudinal, supérieur de l'une des deux parois latérales (2,3) et le segment de toit étant relié, solidaire en rotation, à l'arbre de commande (12), et sachant que le mécanisme de pivotement (10) comprend un entraînement doté d'une crémaillère (14), la crémaillère coopérant avec une roue dentée (15), reliée solidaire en rotation à l'arbre de commande (12), pour ouvrir et fermer le segment de toit (8, 9),
**caractérisé en ce que** l'arbre de commande (12) est relié en rotation à au moins deux leviers de pivotement (17), sachant que, lors de l'ouverture du segment de toit (8, 9) au moins prévu, les leviers de pivotement peuvent pivoter, autour d'un axe de pivotement commun (8), à l'opposé de la paroi latérale (2,3), dans une plage angulaire limitée, allant de 5 ° à 30 °.

2. Véhicule selon la revendication 1,
**caractérisé en ce que**, dans la position d'ouverture, le segment de toit (8, 9) au moins prévu est situé latéralement, à côté de l'une des deux parois latérales (2, 3).

3. Véhicule selon la revendication 1,
**caractérisé en ce que** le levier de pivotement (17) est fixé, en pivotement autour d'un axe de pivotement (18), sur une paroi latérale (2, 3).

4. Véhicule selon la revendication 3,
**caractérisé en ce que** l'arbre de commande (12) est maintenu à une extrémité du levier de pivotement (17) et que le levier de pivotement (17) est monté sur la paroi latérale (2, 3), dans une zone centrale du levier de pivotement.

5. Véhicule selon la revendication 4,
**caractérisé en ce que** l'autre extrémité du levier de pivotement (17) sert de butée (19) pour le mouvement de pivotement en direction de la position d'ouverture du segment de toit (8, 9)

6. Véhicule selon l'une ou plusieurs des revendications précédentes.
**caractérisé en ce que** sont prévus deux segments de toit (8, 9) qui, dans la position de fermeture, sont disposés à la manière d'un toit en selle.

7. Véhicule selon la revendication 6,
**caractérisé en ce que** les deux segments de toit (8, 9) se chevauchent partiellement dans la position de fermeture.

8. Véhicule selon l'une des revendications 6 ou 7, **caractérisé en ce que** chaque segment de toit (8, 9) est doté de son propre mécanisme de pivotement (10).

9. Véhicule selon l'une ou plusieurs des revendications précédentes,
**caractérisé en ce que** le segment de toit (8, 9) au moins prévu est doté d'un appui (20) qui, dans la position de fermeture, entre en contact avec la paroi latérale (2, 3).

10. Véhicule selon l'une ou plusieurs des revendications précédentes,
**caractérisé en ce que**, pour la commande de la crémaillère (14), le mécanisme de pivotement (10) est doté d'un cylindre d'actionnement à double effet (16).

11. Véhicule selon l'une ou plusieurs des revendications précédentes,
**caractérisé en ce que** l'entraînement à crémaillère est relié, à l'une de ses extrémités, par sa crémaillère (14), à la roue dentée (15) de l'arbre de commande (12) et est maintenu, à son extrémité opposée, dans la région de l'une des parois frontales ou latérales, de manière articulée.
